# EUROPÄISCHE PATENTANMELDUNG

(11) **EP 4 799 749 A1**
(43) Veröffentlichungstag der Anmeldung: **02.09.2026**
(21) Anmeldenummer: 26155914.0
(22) Anmeldetag: 03.02.2026
(51) Int. Cl.: B23F 23/12, B23F 5/04, G05B 19/18, G05B 19/4093, B24B 49/02

(54) **VERFAHREN ZUM POLIERSCHLEIFEN VON ZAHNRÄDERN MIT EINEM POLIERSCHLEIFWERKZEUG IN EINER VERZAHNUNGSSCHLEIFMASCHINE**

(30) Priorität: 26.02.2025 DE 102025107235
(71) Anmelder: Kapp Niles GmbH & Co. KG, 96450 Coburg (DE)
(72) Erfinder: Schilling, Nico, 96486 Lautertal (DE); Luther, Lars, 96484 Meeder (DE)
(74) Vertreter: Gosdin, Carstensen & Partner Patentanwälte Partnerschaftgesellschaft mbB

(57) **Zusammenfassung**

Die Erfindung betrifft ein Verfahren zum Polierschleifen von Zahnrädern (2) mit einem Polierschleifwerkzeug (1) in einer Verzahnungsschleifmaschine. Um bei einem Polierschleifvorgang nicht nur die Oberflächenqualität (Rauheit) der Zahnflanken in einem optimalen Bereich zu halten, sondern auch eine bestmögliche Geometrie des bearbeiteten Zahnrads zu erreichen, sieht das Verfahren die Schritte vor: a) Vermessen der Zahnflanken (3) einer Zahnlücke an einem vorgeschliffenen Referenzzahnrad über der Zahnhöhe und der Zahnbreite an einer Anzahl Messstellen, Polierschleifen des Zahnrads mit einer ersten initialen radialen Zustellung, erneutes Vermessen der Flankenoberfläche, Vergleich der gemessenen Lage der Zahnflanken mit der ursprünglichen Lage; sofern der Vergleich ergibt, dass noch nicht alle Messstellen verändert wurden: Speichern der gemessenen Stellen der Flanken, an denen sich bereits eine Veränderung ergeben hat sowie die hierfür erforderliche radiale Zustellung und Wiederholen des Polierschleifens mit inkremental erhöhter Zustellung; b) Ermittlung eines Korrekturwertes bzw. einer Korrekturfunktion für das nachfolgende Polierschleifen aus den ermittelten radialen Zustellungen, die für eine Veränderung benötigt wurden, an allen gemessenen Stellen der Flanken; c) Polierschleifen von Zahnrädern unter Zugrundelegung des ermittelten Korrekturwertes bzw. der ermittelten Korrekturfunktion.

## Beschreibung

Die Erfindung betrifft ein Verfahren zum Polierschleifen von Zahnrädern mit einem Polierschleifwerkzeug in einer Verzahnungsschleifmaschine.

Bei der Hartfeinbearbeitung der Verzahnung eines Zahnrads kommt mitunter als letzter Arbeitsgang das Polierschleifen zum Einsatz. Hierbei wird nur noch relativ wenig Material von der Oberfläche der Zahnflanken abgetragen, allerdings dabei auch noch die endgültige Form und Oberflächenbeschaffenheit (Rauheit) der Zahnflanken definiert.

Das zum Einsatz kommende Polierschleifwerkzeug weist dabei zumeist Abrasivkörner auf, die mit einer relativ weichen Bindung (beispielsweise bestehend aus Polyurethan) an einem Werkzeuggrundkörper gehalten werden. Bei entsprechender Zustellung des Werkzeugs relativ zum Werkstück kann hiermit zwar ein Poliereffekt erzeugt werden. Allerdings kann im Unterschied zum vorgelagerten Schleifvorgang nicht mehr ohne weiteres eine gewünschte Geometrie der Zahnflanken gezielt hergestellt werden.

Dennoch wäre es vorteilhaft, den abschließenden Polierschleifvorgang so durchzuführen, dass sich auch die finale Oberflächentopographie der Zahnflanken betreffend ihre geometrische Lage sowie die Rauheit der Oberfläche optimal ergibt.

Der Erfindung liegt die **Aufgabe** zugrunde, ein Verfahren der eingangs genannten Art so fortzubilden, dass auch bei einem Polierschleifvorgang nicht nur die Oberflächenqualität (Rauheit) der Zahnflanken in einem optimalen Bereich gehalten wird, sondern dass gleichermaßen auch eine bestmögliche Geometrie des bearbeiteten Zahnrads erreicht werden kann.

Die **Lösung** dieser Aufgabe durch die Erfindung ist dadurch gekennzeichnet, dass das Verfahren zum Polierschleifen des Zahnrads die Schritte aufweist:
a) Durchführung der folgenden Schritte an einem Referenzzahnrad oder Probezahnrad:
a1) Vermessen mindestens einer Zahnlücke des geschlichteten, jedoch noch nicht poliergeschliffenen Zahnrads, wobei an den beiden sich gegenüberliegenden Flanken der Zahnlücke sowohl über der Zahnhöhe (d. h. über den Durchmesser des Zahnrads) als auch über der Zahnbreite (d. h. entlang der Breitenerstreckung der Verzahnung) die Lage der Oberfläche der Flanken an einer Anzahl an Stellen der Flanken (Messstellen) gemessen wird;
a2) Polierschleifen des Zahnrads mit dem Polierschleifwerkzeug, wobei das Polierschleifwerkzeug mit einer ersten initialen radialen Zustellung zum Zahnrad zugestellt wird;
a3) Vermessen der Oberfläche der Flanken zur Erfassung der Lage der Oberfläche an der Anzahl an Stellen der Flanken;
a4) Vergleich der gemessenen Lage der Oberfläche an der Anzahl an Stellen der Flanken gemäß Schritt a3) mit der gemessenen Lage der Oberfläche an der Anzahl an Stellen der Flanken gemäß Schritt a1);
a5') Sofern der Vergleich gemäß Schritt a4) ergibt, dass die Lage der Oberfläche an der Anzahl an Stellen der Flanken gemäß Schritt a3) mit der gemessenen Lage der Oberfläche an der Anzahl an Stellen der Flanken gemäß Schritt a1) an allen gemessenen Stellen der Flanken eine Veränderung ergeben hat: Fortführung mit Schritt b);
a5")Sofern der Vergleich gemäß Schritt a4) ergibt, dass die Lage der Oberfläche an der Anzahl an Stellen der Flanken gemäß Schritt a3) mit der gemessenen Lage der Oberfläche an der Anzahl an Stellen der Flanken gemäß Schritt a1) zumindest an einer der gemessenen Stellen der Flanken noch keine Veränderung ergeben hat:
   Speichern der gemessenen Stellen der Flanken, an denen sich bereits eine Veränderung ergeben hat sowie die hierfür erforderliche radiale Zustellung,
   Wiederholen der Schritte a2), a3) und a4), wobei bei jeder Wiederholung das Polierschleifwerkzeug mit einer um ein Inkrement erhöhten radialen Zustellung zum Zahnrad zugestellt wird, wobei die Fortführung mit Schritt b) erfolgt, wenn sich nach einer Wiederholung an allen gemessenen Stellen der Flanken eine Veränderung ergeben hat;
b) Ermittlung mindestens eines Korrekturwertes und/oder mindestens einer Korrekturfunktion für das nachfolgende Polierschleifen aus den ermittelten radialen Zustellungen, die für eine Veränderung benötigt wurden, an allen gemessenen Stellen der Flanken;
c) Polierschleifen von Zahnrädern unter Zugrundelegung des ermittelten Korrekturwertes und/oder der ermittelten Korrekturfunktion.

Das Vermessen gemäß obigem Schritt a1) erfolgt bevorzugt an genau einer Referenzzahnlücke.

Über der Zahnhöhe sind bevorzugt zwischen 3 und 20 Messpunkte äquidistant angeordnet, über der Zahnbreite bevorzugt zwischen 3 und 10 Messpunkte. Besonders bevorzugt liegt die untere Grenze bei 5 Messpunkten. Die gewählte Anzahl von Messpunkten ergibt sich in der Regel als Kompromiss zwischen dem gewonnenen bzw. zu gewinnenden Informationsgehalt und der benötigten Zeit für die Durchführung der Vermessung. Über der Zahnbreite ist dabei bevorzugt eine geringere Auflösung als über der Zahnhöhe (Profil) vorgesehen (d. h. eine geringe Anzahl an Messpunkten).

Nach einer ersten bevorzugten Ausgestaltung des Verfahrens betrifft die Ermittlung des genannten Korrekturwertes gemäß obigem Schritt b) die Symmetrie zwischen den beiden Zahnflanken der Zahnlücke der polierzuschleifenden Verzahnung. In diesem Falle kann konkret vorgesehen werden, dass aus den gespeicherten radialen Zustellungen an den gemessenen Stellen der Flanken gemäß obigem Schritt a5"), an denen sich erstmals eine Veränderung ergeben hat, sowohl für die rechte Flanke als auch für die linke Flanke jeweils ein Mittelwert gebildet wird, wobei aus der Differenz der Mittelwerte der linken und der rechten Flanke ein Ausgleichsdrehwinkel bestimmt wird, um den das Zahnrad bei der Bearbeitung von einer Maschinenachse gedreht wird, um die sich gegenüberliegenden Flanken der Zahnlücke symmetrisch polierzuschleifen. Auf diese Weise wird also der Polierschleifvorgang so durchgeführt, dass sich optimal symmetrische Flanken ergeben.

Eine zweite bevorzugte Ausführungsform sieht vor, dass die Ermittlung der genannten Korrekturfunktion gemäß obigem Schritt b) die Flankenlinie der polierzuschleifenden Verzahnung betrifft. In diesem Falle kann konkret vorgesehen werden, dass aus den gespeicherten radialen Zustellungen an den gemessenen Stellen der Flanken gemäß obigem Schritt a5"), an denen sich erstmals eine Veränderung ergeben hat, ein mittlerer Verlauf der Flankenlinie über der Breite der Verzahnung bestimmt wird, wobei der Verlauf der so bestimmten Flankenline als Korrektur beim Polierschleifen berücksichtigt wird, um so einen gewünschten Verlauf der Flankenline zu erhalten.

Eine dritte bevorzugte Ausführungsform sieht vor, dass die Ermittlung der genannten Korrekturfunktion gemäß obigem Schritt b) das Flankenprofil der polierzuschleifenden Verzahnung betrifft. In diesem Falle kann konkret vorgesehen werden, dass aus den gespeicherten radialen Zustellungen an den gemessenen Stellen der Flanken gemäß obigem Schritt a5"), an denen sich erstmals eine Veränderung ergeben hat, ein mittlerer Verlauf des Flankenprofils über der Höhe der Verzahnung bestimmt wird, wobei der Verlauf des so bestimmten Flankenprofils als Korrektur beim Abrichten des Polierschleifwerkzeugs berücksichtigt wird, um so beim Polierschleifen einen gewünschten Verlauf des Flankenprofils zu erhalten.

Die drei genannten Vorgehensweisen können auch in beliebiger Kombination eingesetzt werden.

Das Vermessen gemäß obigem Schritt a1) und gemäß obigem Schritt a3) erfolgt bevorzugt in der Werkstückaufspannung in der Verzahnungsschleifmaschine.

Das Vermessen gemäß obigem Schritt a1) und gemäß obigem Schritt a3) erfolgt bevorzugt mittels eines taktilen Messelements (d. h. insbesondere mit einem Messtaster).

Das Polierschleifwerkzeug ist bevorzugt eine Schleifschnecke. Die Schleifschnecke weist in diesem Falle bevorzugt Abrasivkörner auf, die mit einer elastischen Bindung gehalten werden, insbesondere mit einer Bindung aus Kunststoff, besonders bevorzugt mit einer Bindung aus Polyurethan.

Das oben genannte Inkrement für die radiale Zustellung beträgt bevorzugt zwischen 20 µm und 50 µm, besonders bevorzugt 30 µm.

Durch die vorgeschlagene Vorgehensweise tastet sich somit das Polierschleifwerkzeug auf der Basis des genannten Inkrements radial nach und nach näher an die Flankenoberfläche heran, bis durch die beschriebene Vermessung und den Vergleich mit der ursprünglichen Oberflächenlage der Zahnflanken festgestellt wird, dass über die gesamten Zahnflanken Material abgetragen wurde (obiger Schritt a). Die dann durchzuführende Bestimmung eines Korrekturwertes bzw. einer Korrekturfunktion (obiger Schritt b) erfolgt dann anhand der vorzugsweise einzigen betrachteten (d. h. vermessenen) Zahnlücke so, dass sich die Symmetrie zwischen den beiden Zahnflanken und/oder die Flankenlinie und/oder das Flankenprofil beim anschließenden Polierschleifen (obiger Schritt c) optimal ergibt.

Die Qualität der Verzahnung kann so verbessert werden.

In vorteilhafter Weise kann somit eine gezielte flächige Veränderung der Wälzschleiftopologie beim Polierschleifen aufgrund der ermittelten Verteilung der Durchdringungstiefe gemäß obigem Schritt a) beim Polierprozess erfolgen. Dies findet hinreichend genau statt, um zu einer verbesserten Qualität der Verzahnung zu gelangen.

Das Verfahren kann automatisiert in der Maschine ablaufen, es ist bedienerunabhängig.

Wie oben erläutert, schließt sich das beschriebene Verfahren also an das Schlichten der Verzahnung des Zahnrads an, die Verzahnung hat demgemäß bereits vor der Durchführung des beschriebenen Verfahrens die gewünschte Endkontur, d. h. die finale Geometrie. Durch das vorgeschlagene Verfahren wird lediglich noch im Anschluss an das Schlichten die Oberfläche der Zahnflanken durch das Polierschleifen in der Rauheit angepasst.

Schruppen und Schlichten sind im vorliegenden Technologiefeld des Verzahnungsschleifens hinlänglich gebräuchliche Begriffe, so dass sie hier nicht näher erläutert werden müssen. Exemplarisch sei auf die DE 10 2009 043 678 A1 der Anmelderin hingewiesen.

Das Verfahren ermöglicht somit eine gezielte Bestimmung der Verteilung des Polierdrucks über der Oberfläche der Zahnflanken (welcher iterativ durch Abfolge der Einzelschritte gemäß obigem Schritt a ermittelt wird) und deren Umsetzung in Korrekturwerte bzw. Korrekturfunktionen, mit denen dann das Polierschleifen stattfinden kann.

In der Zeichnung sind Ausführungsbeispiele der Erfindung dargestellt.
- Fig. 1: zeigt eine Abbott-Kurve in einer allgemeinen Darstellung,
- Fig. 2a: zeigt eine konkrete Abbott-Kurve einer zunächst nur geschliffenen Zahnflanke (unterpolierter Verlauf), wobei eine Zustellung des Schleifpolierwerkzeugs von 5 µm gewählt wurde,
- Fig. 2b: zeigt die Abbott-Kurve einer anschließend polierten Zahnflanke (minimal überpoliert), wobei eine Zustellung des Schleifpolierwerkzeugs von 30 µm gewählt wurde,
- Fig. 2c: zeigt die Abbott-Kurve einer noch stärker polierten Zahnflanke (überpoliert), wobei eine Zustellung des Schleifpolierwerkzeugs von 90 µm gewählt wurde,
- Fig. 3: zeigt gemessene Verläufe für verschiedene sich ergebene Rauheiten der Zahnflanke über der radialen Zustellung (z) des Schleifpolierwerkzeugs,
- Fig. 4a: zeigt aufgenommene Messwerte bei der Vermessung der linken Flanke einer Referenzzahnlücke nach Durchführung eines Polierschleifvorgangs mit vorgegebener radialer Zustellung des Schleif- polierwerkzeugs, wobei die Lage der Oberfläche der Zahnflanke über der Zahnhöhe (Durchmesser d des Zahnrads) und der Zahnbreite (b) dargestellt ist,
- Fig. 4b: zeigt in der Darstellung gemäß Fig. 4a die korrespondierenden aufgenommenen Messwerte für die rechte Flanke der Referenzzahnlücke,
- Fig. 5: zeigt schematisch, wie sich aus einer radialen Zustellung des Werkzeugs zum Zahnrad eine Zieldurchdringung (ZD) ergibt, die für das Polierschleifen angestrebt wird,
- Fig. 6: zeigt schematisch die Zieldurchdringung ZD (in µm) über der Zahnbreite (b) für verschiedene Zahnhöhen (Durchmesserwerte von 100 bis 106 mm) und
- Fig. 7: zeigt schematisch die Zieldurchdringung ZD (in µm) über der Zahnhöhe (d) an unterschiedlichen Stellen der Zahnbreite.

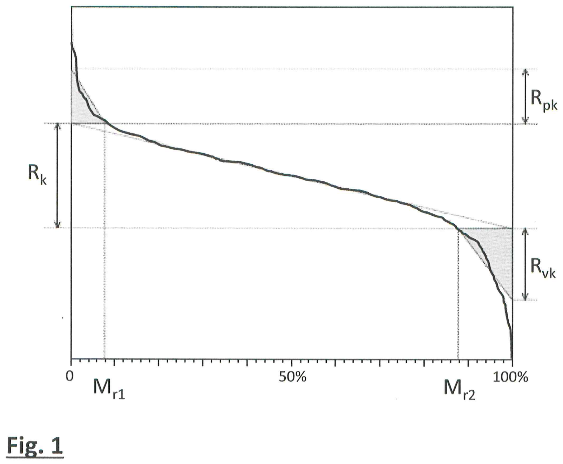

In Figur 1 ist zunächst allgemein eine Abbott-Kurve dargestellt, die zur Beschreibung der Oberflächentextur einer Zahnflanke herangezogen werden kann. Die Kurve beschreibt die Verteilung des Höhenprofils der Flankenoberfläche und wird durch Integration (von 0 % bis 100 %) des Oberflächenprofils berechnet. Die Kurve eignet sich zur Beschreibung der Flankenoberfläche und ist mit den Parametern Rpk, Rk und Rvk der Oberflächenrauheit verbunden.

Wie aus Figur 1 zu erkennen ist, befindet sich für einen prozentualen Anteil (von 0 % bis Mr1 bei ca. 8 %) die Oberflächenrauheit oberhalb eines Mittenbereichs (Rk) und weist einen maximal übersteigenden Wert von Rpk auf. Für einen anderen prozentualen Anteil (von Mr2 bei ca. 88 % bis 100 %) liegt indes die Oberflächenrauheit unterhalb des Mittenbereichs (Rk) und weist einen minimalen Wert von Rvk auf.

Die ideale Oberfläche der Zahnflanke zeichnet sich durch eine möglichst geringe Formänderung durch den Verschleiß der Rauheitsspitzen aus. In diesem Falle steht ein hoher Traganteil der Oberfläche zur Verfügung; gleichzeitig besteht eine gute Rückhaltefähigkeit für den Schmierstoff, der im Betrieb der Verzahnung eingesetzt wird. Dieser wird in den Rauheitstälern zurückgehalten. Vorteilhaft ergibt sich dann eine Verzahnung, die im Betrieb die Eingriffsverhältnisse und Achsabstände konstant hält, die hohe Lasten übertragen kann und genügend Schmierstoff für günstige Reibungszustände zur Verfügung stellt. Ebenso führt ein glatteres Rauheitsprofil zu einem geringeren lokalen Leistungsverlust aufgrund der Gleitreibungsverluste in Betriebszuständen mit Festkörperreibung oder Mischreibung.

Angestrebt wird bei einer Verzahnung oft eine technische Oberfläche, die aus einer Zwischenstufe zwischen nur geschliffener und vollständig polierter Fläche besteht. Die Spitzen bzw. das Rauheitsprofil sind durch die Polierbearbeitung bereits in eine polierte Oberfläche überführt. Die Rauheitstäler aus der Schleifbearbeitung werden allerdings beibehalten.

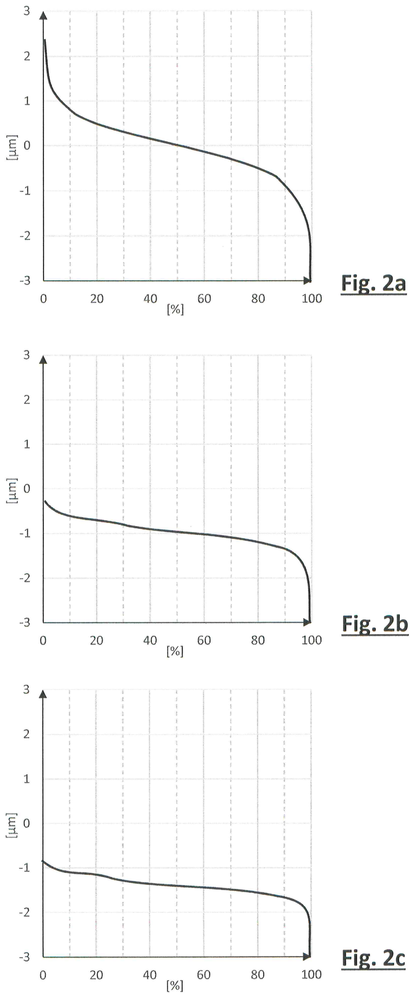

In Figur 2 ist dies illustriert.

Dargestellt ist zunächst in Figur 2a eine nur geschliffene bzw. unterpolierte Zahnflanke, bei der lediglich minimal die Spitzen geglättet sind.

In Figur 2b ist der Fall dargestellt, bei dem die Spitzen geglättet sind und somit ein hoher Traganteil (flacherer Verlauf der Abbott-Kurve) gegeben ist. Allerdings bestehen weiterhin Resttäler im Profil, welche aus der vorausgegangenen Schleifbearbeitung herrühren. Angestrebt wird im Normalfall ein solcher Verlauf der Abbott-Kurve.

In Figur 2c ist eine vollständig polierte Oberfläche dargestellt, die mit Blick auf die Ausgestaltung der Oberfläche einer Zahnflanken eines Zahnrads als überpoliert bezeichnet werden kann. Hier sind nur noch minimal Resttäler vorhanden, so dass die Rückhaltefähigkeit für Öl auch vermindert ist. Der Verlauf der Abbott-Kurve ist hier nochmals flacher als bei Figur 2b.

Für die Rückhaltefähigkeit von Schmierstoff ist letztlich der Wert Rvk der Abbott-Kurve (s. Figur 1) relevant.

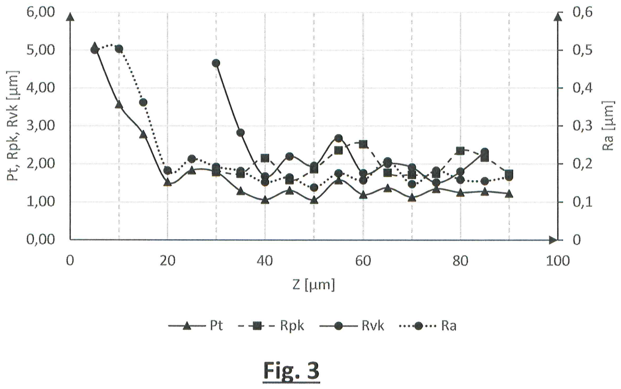

Der sich ergebende Übergang von einer nur geschliffenen Oberfläche einer Zahnflanke in eine polierte Oberfläche ist in Figur 3 skizziert. Dargestellt ist hier der Verlauf von Rauheitskennwerten (insbesondere Ra sowie Rpk und Rvk gemäß der Abbott-Kurve, s. Figur 1), welches sich bei einer relativen radialen Zustellung Z des Polierschleifwerkzeugs zum zu polierenden Zahnrad ergeben.

Zu erkennen ist, dass zunächst eine gewisse Zustellung Z erforderlich ist, bevor überhaupt ein merklicher Einfluss auf die Oberflächenrauheit festzustellen ist. Es wird beispielsweise auf den Verlauf des Ra-Wertes Bezug genommen, der sich bei Zustellungen unterhalb von 10 µm gar nicht beeinflussen lässt. Dies ist letztlich auf die Elastizität des Polierschleifwerkzeugs zurückzuführen. Dessen Abrasivpartikel sind meist in einer elastischen Bindung (beispielsweise aus Polyurethan) am Werkzeuggrundkörper fixiert, so dass ein gewisses Mindestmaß an Zustellung erforderlich ist, bevor überhaupt ein Einfluss feststellbar ist.

Bei dem vorgeschlagenen Verfahren wird folgende Vorgehensweise beschritten:
Zunächst wird ein Referenzzahnrad bzw. ein Probezahnrad auf die Werkstückspindel einer (Polier-)Schleifmaschine aufgenommen. Das Referenzzahnrad ist fertig geschliffen; es steht nur noch der Schleifpoliervorgang aus. Bei dem Referenzzahnrad kann es sich um ein erstes Werkstück eines zu fertigenden Loses handeln, welches anschließend gegebenenfalls noch zum Gutteil poliergeschliffen wird; allerdings kann es auch ein Zahnrad sein, welches nach der erläuterten Bearbeitung und Vermessung Ausschuss wird.

Auf der Werkzeugspindel ist ein Polierschleifwerkzeug gespannt, wobei es sich insbesondere um eine Polierschleifschnecke handeln kann, deren Bindung aus Kunststoff (insbesondere Polyurethan) besteht und welches (im Vergleich mit einer Schleifschnecke für das Schlichten der Verzahnung) entsprechend nachgiebig bzw. elastisch ist.

Mit dem Referenzzahnrad bzw. Probezahnrad wird nun wie folgt vorgegangen:
Es wird (bevorzugt) eine (einzige) Referenzzahnlücke am Referenzzahnrad definiert, die der weiteren Untersuchung zu Grunde liegt. Mittels eines taktilen Messelements (Messtaster) erfolgt eine Vermessung besagter Zahnlücke. Dabei wird sowohl über der Zahnhöhe (also in radiale Richtung des Zahnrads) als auch über der Zahnbreite (also in Achsrichtung des Zahnrads) ein vorgegebenes Raster von Messpunkten angefahren und die Lage der Oberfläche der beiden sich gegenüberliegenden Zahnflanken der Referenzzahnlücke erfasst und gespeichert (s. obigen Schritt a1). Über der Zahnhöhe können beispielsweise 10 Messpunkte und über der Zahnbreite beispielsweise 5 Messpunkte vorgesehen werden, so dass sich in diesem Falle pro Zahnflanke 50 Messpunkte ergeben.

Nun erfolgt ein erstes Polierschleifen des Zahnrads mit dem Polierschleifwerkzeug. Das Werkzeug wird hierbei mit einer ersten initialen radialen (kleinen) Zustellung zum Zahnrad zugestellt (s. obigen Schritt a2).

Anschließend erfolgt die Wiederholung der Vermessung der Oberfläche der Zahnflanken; es wird erneut die Lage der Oberfläche (im Beispielfall an den 10 x 5 = 50 Messpunkten) erfasst und gespeichert (s. obigen Schritt a3).

Nunmehr erfolgt ein Vergleich der Messpunkte, wie sie sich nach und vor dem ersten Polierschleifen ergeben (s. obigen Schritt a4). Die erste initiale radiale Zustellung wird so gewählt, dass nicht zu erwarten ist, dass sich infolge des ersten Polierschleifvorgangs bereits an allen Messpunkten eine Veränderung ergeben hat. So kann beispielsweise die erste radiale Zustellung im Bereich von 10 µm liegen, mit der das Werkzeug relativ zum Werkstück eintaucht, ausgehend von der Soll-Geometrie der Zahnflanken.

Insoweit wird regelmäßig besagter Vergleich (gemäß Schritt a4) ergeben, dass die Lage der Oberfläche der sich gegenüberliegenden Zahnflanken an den Messstellen nicht vollständig mit der gemessenen Lage gemäß Schritt a1 an allen Messpunkten übereinstimmen; Veränderungen wird es regelmäßig nur an einigen Messpunkten gegeben haben.

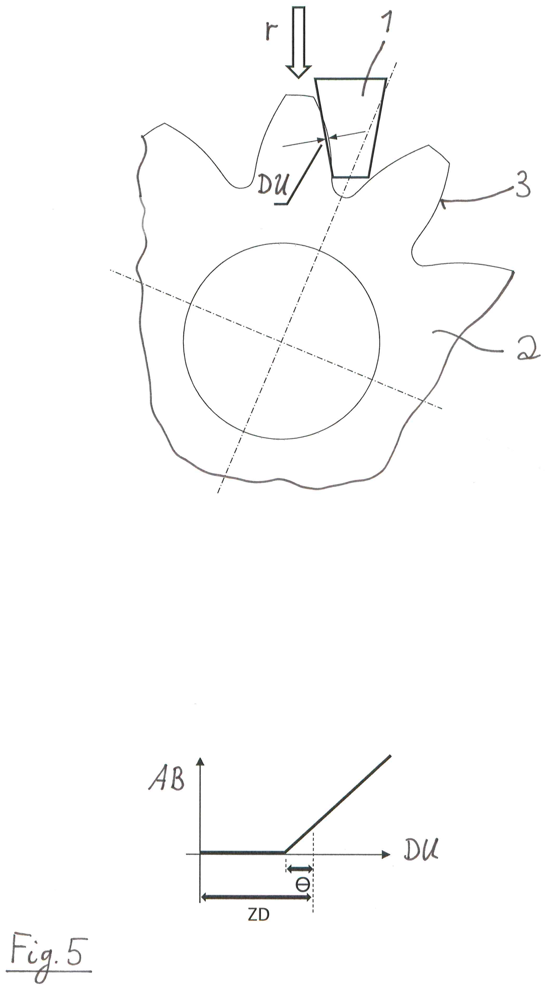

Für all diejenigen Messpunkte, für die bereits eine Veränderung zur Ausgangslage festgestellt wurde, wird festgehalten bzw. gespeichert, wie groß die radiale Zustellung war, die zur Veränderung der Oberfläche führte und um welchen Messpunkt es sich handelt. Diese radiale Zustellung führt über die geometrischen Verhältnisse an der Flankenoberfläche (d. h. aufgrund der Form der Evolvente) zu einer entsprechenden Zustellung normal zur Flankenoberfläche, zu der sich dann die gewünschten Eintauchtiefe (Θ) für das Polierschleifen addiert, um zu einer gewünschten Zieldurchdringung zu gelangen (s. Figur 5).

Das sich Veränderungen noch nicht an allen Messpunkten ergeben haben, wird nunmehr (gemäß Schritt a5'') das Polierschleifen fortgesetzt, und zwar der Gestalt, dass das Polierschleifwerkzeug nun um einen inkrementalen Betrag der radialen Zustellung weiter zugestellt wird. Dieser inkrementale Betrag kann beispielsweise zwischen 20 µm und 40 µm betragen, insbesondere 30 µm. Nach dem erneuten Polierschleifen wird die Messung wiederholt und geprüft, ob sich verglichen mit dem Ausgangszustand nunmehr an allen Messpunkten Veränderungen ergeben haben.

Messpunkte, für die nunmehr eine Veränderung zum Ausgangszustand festgestellt wird, werden wiederum registriert und die hierfür zuletzt verwendete radiale Zustellung bzw. die hieraus resultierende Durchdringung (s. Figur 5) gespeichert.

Das Verfahren wird mit weiter inkremental wachsender Zustellung wiederholt, bis die Messung zeigt, dass sich die Messwerte an allen Messpunkten, verglichen mit dem Ausgangszustand, verändert haben.

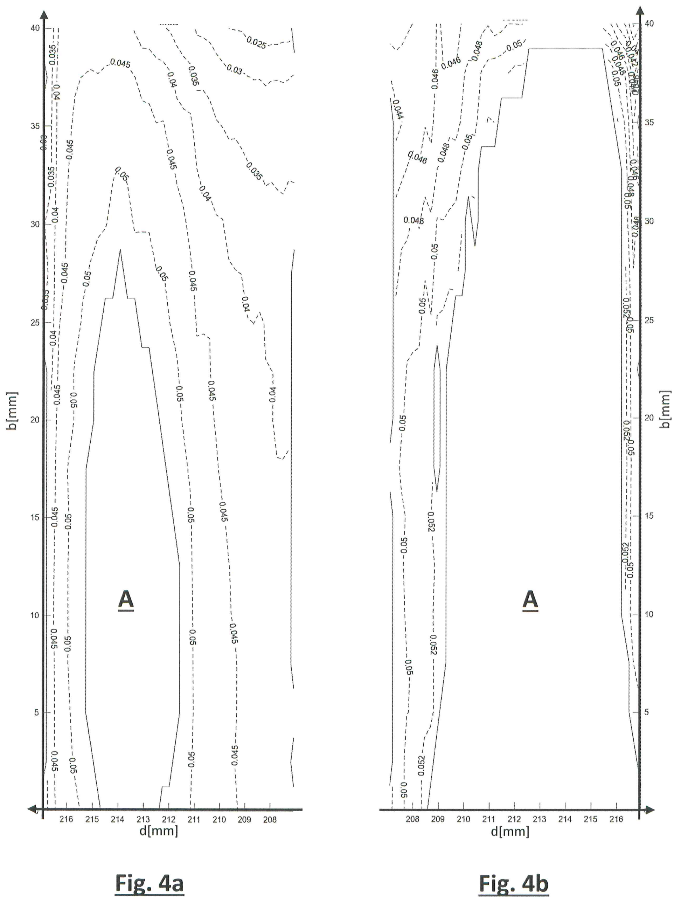

In den Figuren 4a und 4b ist für einen dieser Zwischenzustände (zwischen erstem Polierschleifen und letztem Polierschleifen) der gemessene Verlauf bzw. die Oberflächenlage der Zahnflanke (in Figur 4a für die linke Zahnflanke und in Figur 4b für die rechte Zahnflanke der Referenzzahnlücke) skizziert. Die eingetragenen (Iso-)Linien ("0.04", "0.045", "0.05" etc. in mm) geben den Abtrag über die Fläche der Zahnflanke an (s. AB in Figur 5).

In beiden Figuren 4a und 4b ist ein Arial "A" markiert, bei dem sich noch keine Veränderung im Vergleich mit der ersten Messung ergeben hat. Demgemäß wird das Polierschleifen mit weiter erhöhtem Inkrement fortgesetzt, bis sich nach einer letzten Wiederholung an allen Messstellen der Zahnflanken eine Veränderung ergeben hat.

Ist dies der Fall, wird das Polierschleifen beendet und die ermittelten Daten der Ermittlung eines Korrekturwertes bzw. einer Korrekturfunktion zu Grunde gelegt (s. obigen Schritt b).

Dabei ist nach einer ersten bevorzugten Ausgestaltung daran gedacht, die ermittelten Daten zu Grunde zu legen, um das sich anschließende Polierschleifen von Zahnrädern so durchzuführen, dass sich eine verbesserte Symmetrie der beiden sich gegenüberliegenden Zahnflanken, bezogen auf die Mitte der Zahnlücke, ergibt.

Hierzu werden sowohl für die linke als auch für die rechte Zahnflanke der wie vorstehend erläutert bearbeiteten Referenzzahnlücke an den Messpunkten (im Beispielfall also an den 10 x 5 = 50 Messpunkten) Differenzen gebildet, welche sich aus der jeweiligen Zustellung bis zur Veränderung der Geometrie abzüglich der Zustellung beim Start des Verfahrens ergeben. Für diese Differenzen kann ein Mittelwert (beispielsweise das arithmetische Mittel: Summe aller Differenzen für alle Messpunkte geteilt durch Anzahl der Messpunkte) bestimmt werden, so dass sowohl für die linke also für die rechte Zahnflanke der Referenzzahnlücke jeweils ein Wert vorliegt. Nun kann hieraus - beispielsweise bezogen auf den Teilkreis der Verzahnung - ein Drehwinkel des Werkstücks relativ zum Werkzeug (d. h. eine Drehung um die C-Achse) berechnet werden, so dass das Werkzeug relativ zum Werkstück bzw. zu den zu schleifenden Zahnlücken symmetrisch platziert wird.

Im genannten Ausführungsbeispiel besteht der Korrekturwert (gemäß obigem Schritt b) also in einem bestimmten Drehwinkel um die Werkstückachse, welcher beim sich anschließenden Polierschleifen (gemäß obigem Schritt c) berücksichtigt wird, um die Zahnräder mit verbesserter Symmetrie der Zahnlücken bezogen auf deren Mittenebene zu bearbeiten.

In Figur 5 ist illustriert, wie sich aus einer radialen Zustellung r des Polierschleifwerkzeugs 1 zum Werkstück 2 (Zahnrad) aufgrund der geometrischen Verhältnisse (d. h. namentlich aufgrund des Winkels, welcher die Oberflächennormale an einem betrachteten Punkt der Flankenoberfläche 3 zur radialen Richtung r einschließt) eine Zustellung und damit eine Durchdringung DU senkrecht auf die Oberfläche der Zahnflanke 3 ergibt (s. oberes Bild in Figur 5). Demgemäß zeigt das obere Bild in Figur 5 also, wie eine radiale Zustellung r zu einer Durchdringung DU führt, die senkrecht zur Flankenoberfläche 3 zu verstehen ist; zwischen radialer Zustellung r und Durchdringung DU besteht somit eine Korrelation, die sich aus den geometrischen Verhältnissen der Verzahnung ergibt.

Im unteren Bild in Figur 5 ist in Form eines Koordinatensystems dargestellt, bei welcher Durchdringung DU sich welcher Abtrag AB auf der Zahnflanke 3 ergibt.

Unter Bezugnahme auf die Erläuterungen zu Figur 3 sei in Erinnerung gerufen, dass es zunächst einer gewissen Zustellung (normal zur Zahnflanke) bedarf, um überhaupt einen Effekt zu erreichen. Wie oben erläutert (s. obigen Schritt a) muss erst für die einzelnen Punkte auf der Oberfläche der Zahnflanken eine gewisse Durchdringung DU erreicht werden, bis überhaupt eine Veränderung der Oberfläche festgestellt werden kann (s. unteres Bild in Figur 5: es erfolgt zunächst bei zunehmender Durchdringung DU noch kein Abtrag AB, weshalb die Kurve entlang der Abszisse verläuft). Erst wenn eine hinreichende Durchdringung DU gegeben ist, beginnt die Veränderung der Oberfläche am betreffenden Punkt der Zahnflanke (s. ansteigende Gerade ab dem Beginn von Θ). An dieser Stelle wird dann die Eintauchtiefe Θ (z. B. 5 µm, 10 µm, 15 µm oder 20 µm) hinzuaddiert (s. unteres Bild in Figur 5) mit der der Polierschleifvorgang als solcher erfolgen soll, um zu einer gewünschten Zieldurchdringung ZD zu gelangen. Gemäß dem beschriebenen Verfahren erfolgt dies für die gesamte Oberfläche der Zahnflanken, d. h. gemäß den dort vorgesehenen Messpunkten in radiale Richtung sowie in Breitenrichtung der Verzahnung.

Die Zieldurchdringung ZD ergibt sich also, wenn für die einzelnen Punkte nach Durchführung des obigen Schritts a) die gewünschte definierte Eintauchtiefe Θ hinzuaddiert wird, um den angestrebten Poliereffekt zu erzielen.

Der oben ermittelte Datensatz für die einzelne Messpunkte (betreffend die genannte Differenz) kann nach einer weiteren Ausführungsform der Erfindung auch dazu benutzt werden, die Zahnlinie in Richtung der Drehachse des Zahnrades, d. h. in Breitenrichtung der Verzahnung, beim Polierschleifen (gemäß obigem Schritt c) zu verbessern.

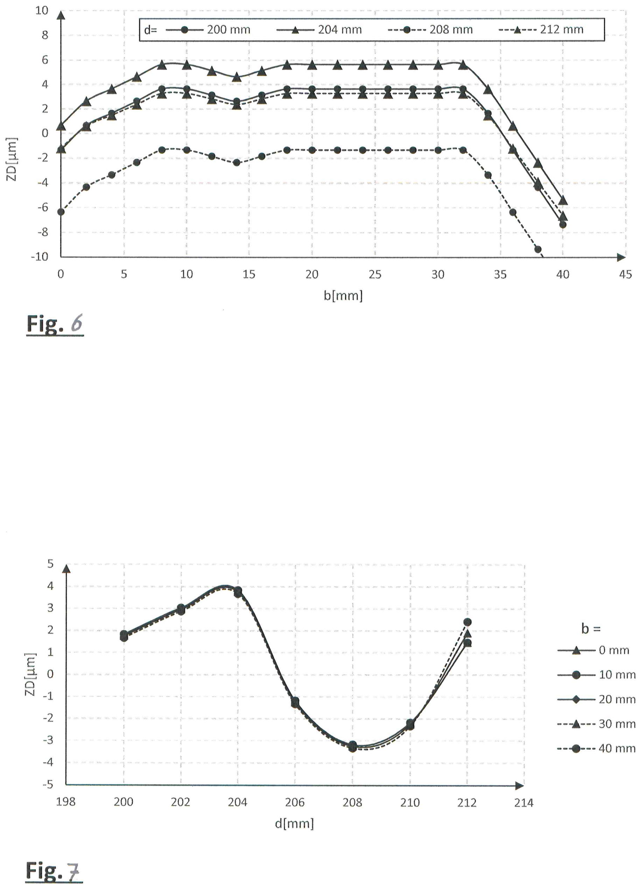

Ein solches Vorgehen ist in Figur 6 illustriert.

Hier ist dargestellt, wie groß die Zieldurchdringung ZD (in µm) über der Zahnbreite b für verschiedene Durchmesser d (also über der Zahnhöhe) verläuft. Zur Definition der Zieldurchdringung ZD wird auf Figur 5 Bezug genommen.

Wie in Figur 6 zu erkennen, ergibt sich über der Zahnbreite b für die verschiedenen Durchmesser d letztlich ein ähnlicher Verlauf. Für alle aufgenommenen Verläufe kann wiederum ein Mittelwert (beispielsweise ein arithmetischer Mittelwert) bestimmt werden, so dass aus den in Figur 6 dargestellten insgesamt sieben Kurvenverläufen ein einziger stellvertretender Kurvenverlauf gebildet wird, der für die Zieldurchdringung ZD über der Breite b der Verzahnung gilt.

Dieser Kurvenverlauf kann dann als Korrekturfunktion beim Polierschleifen von Zahnrädern (gemäß obigem Schritt c) berücksichtigt werden, d. h. es wird eine Linienkorrektur der Verzahnung durch eine veränderliche radiale Zustellung (X-Achse) entlang der Achsrichtung der Verzahnung (Z-Achse) in der Maschinensteuerung berücksichtigt. Der aus Figur 6 gewonnene stellvertretende Kurvenverlauf wird also sozusagen beim Polierschleifen und bei der Bearbeitung entlang der Werkstückachse "gegengehalten", um im Ergebnis eine verbesserte Linie zu erreichen.

Besagte Linienkorrektur kann insbesondere auch über eine Z-abhängige Zustellung (der X-Achse) in Kombination mit einer Z-abhängigen Drehung um die Werkstückachse (C-Achse) beim sich anschließenden Polierschleifen (gemäß obigem Schritt c) erfolgen. Möglich ist es auch, die Korrektur dadurch anzubringen, dass beim Polierschleifen eine gezielte Verschiebung des Werkzeugs entlang seine Drehachse (Shift-Achse: Y-Achse) erfolgt.

Eine weitere mögliche Ausgestaltung des Verfahrens besteht darin, eine Korrekturfunktion zu ermitteln, welche auf das Zahnprofil (d. h. das Profil über die Höhe der Verzahnung) abstellt. Dies ist in Figur 7 illustriert.

Hier ist die Zieldurchdringung ZD (in µm) über dem Durchmesser d des Zahnrads (also über der Zahnhöhe) für alle gemessenen Stellen entlang der Zahnbreite dargestellt (wobei die Kurven alle sehr ähnlich sind und deswegen dicht beieinander liegen). Aus diesen Daten kann wiederum ein Mittelwert (z. B. das arithmetische Mittel) gebildet werden, um eine Funktion zu definieren, mittels der die Verzahnung beim sich anschließenden Polierschleifen (gemäß obigem Schritt c) modifiziert wird.

Die Berücksichtigung der Korrekturfunktion beim sich anschließenden Polierschleifen (gemäß obigem Schritt c) erfolgt in diesem Falle allerdings so, dass die aus Figur 7 gewonnene Funktion beim Abrichten des Schleifpolierwerkzeug (d. h. insbesondere der Schleifschnecke) berücksichtigt wird. Der Abrichtvorgang wird demgemäß so durchgeführt, dass die aus Figur 7 resultierende Funktion beim Abrichten des Polierteils des Werkzeugs "gegengehalten" bzw. überlagert wird.

Demgemäß kann gezielt auf das Verzahnungsprofil Einfluss genommen werden.

Es sei an dieser Stelle erwähnt, dass die Umsetzung der ermittelten Korrekturfunktionen auch durch übliche Methoden bewerkstelligt werden kann, beispielsweise durch Definition einer Spline-Funktion, die die gewünschten Korrekturen beschreibt und bei der Steuerung der Achsen berücksichtigt wird. Genauso kann für die Korrekturfunktion auch ein Polynom definiert werden, welches von der Maschinensteuerung berücksichtigt wird.

Somit lässt sich Folgendes feststellen:
Wenn das beschriebene Verfahren zur Bestimmung der lokalen Polierbedingungen angewendet wird, steht eine Ausgleichstopologie (Korrekturwert bzw. Korrekturfunktion) für das nachfolgende Polierschleifen (gemäß obigem Schritt c) zur Verfügung.

Durch die verfahrensgemäße Vorgehensweise können lokale Poliereigenschaften auf der Oberfläche der Zahnflanken berücksichtigt und somit eine Ausgleichstopologie definiert werden, die die lokale unterschiedliche Durchdringung ausgleicht.

Das beschriebene Verfahren ermöglicht es, die ermittelten Messwerte per Korrekturwert bzw. Korrekturfunktion in die Kinematik der Maschine beim Polierschleifen zu übertragen bzw. beim Abrichten der Schleifschnecke zu berücksichtigen.

Somit ist es in vorteilhafter Weise einfach und kostengünstig möglich, ein verbessertes Ergebnis des Polierschleifens zu erreichen. Die Flankenoberfläche kann mit höherer Qualität hergestellt werden. Der Vorgang kann automatisiert durchgeführt werden, so dass er preisgünstig umgesetzt werden kann.

Oben beschrieben sind konkret drei unterschiedliche Lösungsmöglichkeiten, die zur Verbesserung der Symmetrie der Zahnlücke, zur Verbesserung der Zahnlinie und zur Verbesserung des Zahnprofils führen. Diese Ansätze können isoliert aber auch in beliebiger Kombination verwirklicht werden.

Für die Verbesserung der Symmetrie erfolgt ein Ausgleich der Flanken durch Ermittlung eines Ausgleichs-Drehwinkels für das Werkstück, wie oben beschrieben. Die gemittelte Zieldurchdringung auf beiden vermessenen Flanken der Referenzzahnlücke wird also durch eine C-Achsen-Korrektur ausgeglichen.

In ähnlicher Weise kann eine Ausgleichsfunktion zur Beeinflussung der Oberflächengeometrie der Zahnflanken in Linienrichtung (d. h. in Richtung der Drehachse des Zahnrads) erfolgen. Hier werden mehrere Achsen der Maschine durch die Steuerung entsprechend interpoliert, um die ermittelte Ausgleichsfunktion beim Polierschleifen umzusetzen.

Indes kann eine Ausgleichsfunktion, welche das Profil (über der Zahnhöhe) betrifft, beim Abrichten des Schleifwerkzeugs berücksichtigt werden.

## Patentansprüche

1. Verfahren zum Polierschleifen von Zahnrädern mit einem Polierschleifwerkzeug in einer Verzahnungsschleifmaschine, welches die Schritte aufweist:
a) Durchführung der folgenden Schritte an einem Referenzzahnrad oder Probezahnrad:
a1) Vermessen mindestens einer Zahnlücke des geschlichteten, jedoch noch nicht poliergeschliffenen Zahnrads, wobei an den beiden sich gegenüberliegenden Flanken der Zahnlücke sowohl über der Zahnhöhe als auch über der Zahnbreite die Lage der Oberfläche der Flanken an einer Anzahl an Stellen der Flanken (Messstellen) gemessen wird;
a2) Polierschleifen des Zahnrads mit dem Polierschleifwerkzeug, wobei das Polierschleifwerkzeug mit einer ersten initialen radialen Zustellung zum Zahnrad zugestellt wird;
a3) Vermessen der Oberfläche der Flanken zur Erfassung der Lage der Oberfläche an der Anzahl an Stellen der Flanken;
a4) Vergleich der gemessenen Lage der Oberfläche an der Anzahl an Stellen der Flanken gemäß Schritt a3) mit der gemessenen Lage der Oberfläche an der Anzahl an Stellen der Flanken gemäß Schritt a1);
a5') Sofern der Vergleich gemäß Schritt a4) ergibt, dass die Lage der Oberfläche an der Anzahl an Stellen der Flanken gemäß Schritt a3) mit der gemessenen Lage der Oberfläche an der Anzahl an Stellen der Flanken gemäß Schritt a1) an allen gemessenen Stellen der Flanken eine Veränderung ergeben hat: Fortführung mit Schritt b);
a5")Sofern der Vergleich gemäß Schritt a4) ergibt, dass die Lage der Oberfläche an der Anzahl an Stellen der Flanken gemäß Schritt a3) mit der gemessenen Lage der Oberfläche an der Anzahl an Stellen der Flanken gemäß Schritt a1) zumindest an einer der gemessenen Stellen der Flanken noch keine Veränderung ergeben hat:
Speichern der gemessenen Stellen der Flanken, an denen sich bereits eine Veränderung ergeben hat sowie die hierfür erforderliche radiale Zustellung,
Wiederholen der Schritte a2), a3) und a4), wobei bei jeder Wiederholung das Polierschleifwerkzeug mit einer um ein Inkrement erhöhten radialen Zustellung zum Zahnrad zugestellt wird, wobei die Fortführung mit Schritt b) erfolgt, wenn sich nach einer Wiederholung an allen gemessenen Stellen der Flanken eine Veränderung ergeben hat;
b) Ermittlung mindestens eines Korrekturwertes und/oder mindestens einer Korrekturfunktion für das nachfolgende Polierschleifen aus den ermittelten radialen Zustellungen, die für eine Veränderung benötigt wurden, an allen gemessenen Stellen der Flanken;
c) Polierschleifen von Zahnrädern unter Zugrundelegung des ermittelten Korrekturwertes und/oder der ermittelten Korrekturfunktion.

2. Verfahren nach Anspruch 1, **dadurch gekennzeichnet, dass** das Vermessen gemäß Schritt a1) gemäß Anspruch 1 an genau einer Referenzzahnlücke erfolgt.

3. Verfahren nach Anspruch 1 oder 2, **dadurch gekennzeichnet, dass** über der Zahnhöhe zwischen 3 und 20 Messpunkte äquidistant angeordnet sind.

4. Verfahren nach einem der Ansprüche 1 bis 3, **dadurch gekennzeichnet, dass** über der Zahnbreite zwischen 3 und 10 Messpunkte äquidistant angeordnet sind.

5. Verfahren nach einem der Ansprüche 1 bis 4, **dadurch gekennzeichnet, dass** die Ermittlung eines Korrekturwertes gemäß Schritt b) von Anspruch 1 die Symmetrie zwischen den beiden Zahnflanken der Zahnlücke der polierzuschleifenden Verzahnung betrifft.

6. Verfahren nach Anspruch 5, **dadurch gekennzeichnet, dass** aus den gespeicherten radialen Zustellungen an den gemessenen Stellen der Flanken gemäß Schritt a5") von Anspruch 1, an denen sich erstmals eine Veränderung ergeben hat, sowohl für die rechte Flanke als auch für die linke Flanke jeweils ein Mittelwert gebildet wird, wobei aus der Differenz der Mittelwerte der linken und der rechten Flanke ein Ausgleichsdrehwinkel bestimmt wird, um den das Zahnrad bei der Bearbeitung von einer Maschinenachse gedreht wird, um die sich gegenüberliegenden Flanken der Zahnlücke symmetrisch polierzuschleifen.

7. Verfahren nach einem der Ansprüche 1 bis 4, **dadurch gekennzeichnet, dass** die Ermittlung einer Korrekturfunktion gemäß Schritt b) von Anspruch 1 die Flankenlinie der polierzuschleifenden Verzahnung betrifft.

8. Verfahren nach Anspruch 7, **dadurch gekennzeichnet, dass** aus den gespeicherten radialen Zustellungen an den gemessenen Stellen der Flanken gemäß Schritt a5") von Anspruch 1, an denen sich erstmals eine Veränderung ergeben hat, ein mittlerer Verlauf der Flankenlinie über der Breite der Verzahnung bestimmt wird, wobei der Verlauf der so bestimmten Flankenline als Korrektur beim Polierschleifen berücksichtigt wird, um so einen gewünschten Verlauf der Flankenline zu erhalten.

9. Verfahren nach einem der Ansprüche 1 bis 4, **dadurch gekennzeichnet, dass** die Ermittlung einer Korrekturfunktion gemäß Schritt b) von Anspruch 1 das Flankenprofil der polierzuschleifenden Verzahnung betrifft.

10. Verfahren nach Anspruch 9, **dadurch gekennzeichnet, dass** aus den gespeicherten radialen Zustellungen an den gemessenen Stellen der Flanken gemäß Schritt a5") von Anspruch 1, an denen sich erstmals eine Veränderung ergeben hat, ein mittlerer Verlauf des Flankenprofils über der Höhe der Verzahnung bestimmt wird, wobei der Verlauf des so bestimmten Flankenprofils als Korrektur beim Abrichten des Polierschleifwerkzeugs berücksichtigt wird, um so beim Polierschleifen einen gewünschten Verlauf des Flankenprofils zu erhalten.

11. Verfahren nach einem der Ansprüche 1 bis 10, **dadurch gekennzeichnet, dass** das Vermessen gemäß Schritt a1) und gemäß Schritt a3) von Anspruch 1 in der Werkstückaufspannung in der Verzahnungsschleifmaschine erfolgt.

12. Verfahren nach einem der Ansprüche 1 bis 11, **dadurch gekennzeichnet, dass** das Vermessen gemäß Schritt a1) und gemäß Schritt a3) von Anspruch 1 mittels eines taktilen Messelements, insbesondere mit einem Messtaster, erfolgt.

13. Verfahren nach einem der Ansprüche 1 bis 12, **dadurch gekennzeichnet, dass** das Polierschleifwerkzeug eine Schleifschnecke ist.

14. Verfahren nach Anspruch 13, **dadurch gekennzeichnet, dass** die Schleifschnecke Abrasivkörner aufweist, die mit einer elastischen Bindung gehalten werden, insbesondere mit einer Bindung aus Kunststoff, besonders bevorzugt mit einer Bindung aus Polyurethan.

15. Verfahren nach einem der Ansprüche 1 bis 14, **dadurch gekennzeichnet, dass** das Inkrement für die radiale Zustellung zwischen 10 µm und 50 µm beträgt, vorzugsweise zwischen 20 µm und 40 µm, besonders bevorzugt 30 µm.
